# EUROPEAN PATENT APPLICATION

(11) **EP 3 872 804 A1**
(43) Date of publication of application: **01.09.2021**
(21) Application number: 20188826.0
(22) Date of filing: 31.07.2020
(51) Int. Cl.: G09G 3/34, G09G 3/3208

(54) **BRIGHTNESS ADJUSTMENT METHOD AND DEVICE, MOBILE TERMINAL AND STORAGE MEDIUM**

(30) Priority: 26.02.2020 CN 202010120784
(71) Applicant: Beijing Xiaomi Mobile Software Co., Ltd., Beijing 100085 (CN)
(72) Inventor: PENG, Cong, Beijing, 100085 (CN); GAO, Wenjun, Beijing, 100085 (CN)
(74) Representative: Gevers Patents

(57) **Abstract**

Provided are a brightness adjustment method and device, a mobile terminal and a storage medium. The method is applied to a mobile terminal and includes that: a posture of the mobile terminal is determined; an orientation relationship between a display screen of the mobile terminal and a position of a light source is determined according to the posture and the position of the light source; and display brightness of the display screen is adjusted according to the orientation relationship. Accordingly, the display brightness of the display screen is further adjusted according to the orientation relationship between the display screen of the mobile terminal and the light source, so that the adjusted display brightness is more accurate and may be adapted to light changes better.

## Description

### TECHNICAL FIELD

The present disclosure generally relates to the field of intelligent control, and particularly, to a brightness adjustment method and device, a mobile terminal and a storage medium.

### BACKGROUND

In the use of a mobile phone, backlight of the mobile phone may be automatically adjusted to be adapted to ambient brightness. The adjustment principle thereof is that a light intensity of an external environment may be acquired by a light sensor and then brightness of the external environment may be calculated and acquired to further adjust the backlight. However, limited by hardware, a mobile phone typically includes only one light sensor that is on a surface where a display screen is located and is a front light sensor. The only one front light sensor mostly detects light facing the mobile phone, and consequently, backlight brightness adjusted based on light detected by the front light sensor may be slightly high or low and often cannot be accurately adapted to ambient brightness.

### SUMMARY

The present disclosure provides a brightness adjustment method and device, a mobile terminal and a storage medium.

According to a first aspect of embodiments of the present disclosure, a method for brightness adjustment is provided, which may be applied to a mobile terminal and include that:
a posture of the mobile terminal is determined;
an orientation relationship between a display screen of the mobile terminal and a light source is determined according to the posture and a position of the light source; and
display brightness of the display screen is adjusted according to the orientation relationship.

Optionally, the orientation relationship between the display screen and the light source may include that the display screen faces the light source or the display screen is back to the light source.

Optionally, the operation that the display brightness of the display screen is adjusted according to the orientation relationship may include:
when the display screen faces the light source and a light sensor of the mobile terminal detects brightness greater than a first preset threshold, the display brightness of the display screen is decreased; or
when the display screen is back to the light source and the light sensor of the mobile terminal detects brightness less than a second preset threshold, the display brightness of the display screen is increased.

Optionally, the method may further include that:
an adjustment parameter of the display brightness is acquired.

The operation that the display brightness of the display screen is adjusted may include that:
the display brightness of the display screen is decreased or increased according to the adjustment parameter.

Optionally, the operation that the posture of the mobile terminal is determined may include that:
the posture of the mobile terminal is determined according to data acquired by an acceleration sensor of the mobile terminal.

According to a second aspect of the embodiments of the present disclosure, a mobile terminal is provided, which may include:
a display screen;
an acceleration sensor, configured to determine a posture of the mobile terminal; and
a processing module, connected with the display screen and the acceleration sensor, and configured to determine an orientation relationship between the display screen and a light source according to the posture and a position of the light source and adjust display brightness of the display screen according to the orientation relationship.

Optionally, the orientation relationship between the display screen and the light source may include that the display screen faces the light source or the display screen is back to the light source.

Optionally, the mobile terminal may further include:
a light sensor, configured to detect ambient brightness; and
the processing module may be connected with the light sensor, and may be configured to decrease the display brightness of the display screen when the display screen faces the light source and brightness greater than a first preset threshold is detected, or, increase the display brightness of the display screen when the display screen is back to the light source and brightness less than a second preset threshold is detected.

Optionally, the processing module may further be configured to acquire an adjustment parameter of the display brightness and decrease or increase the display brightness of the display screen according to the adjustment parameter.

According to a third aspect of the embodiments of the present disclosure, a brightness adjustment device is provided, which may include:
a processor; and
a memory configured to store instructions executable by the processor.

The processor may be configured to execute the instructions stored in the memory to implement any method of the first aspect.

According to a fourth aspect of the embodiments of the present disclosure, a non-transitory computer-readable storage medium is provided. Instructions in the storage medium may be executed by a processor of a device for brightness adjustment to cause the device for brightness adjustment to implement any method of the first aspect.

The technical solutions provided by embodiments of the present disclosure may have the following advantages.

According to the embodiments of the present disclosure, a posture of a mobile terminal may be determined, an orientation relationship between a display screen of the mobile terminal and a light source may be further determined according to the posture and a position of the light source, and display brightness of the display screen may be adjusted according to the orientation relationship. Accordingly, the display brightness may be adjusted according to the orientation relationship after the orientation relationship between the display screen of the mobile terminal and the light source is determined, so that the display brightness may be adapted to the ambient brightness more accurately under different orientation relationships, the condition that the display brightness is adjusted to be slightly high or slightly low due to a position relationship of the light sensor may be reduced, and the display brightness may be adapted to light changes better and meet a practical requirement of a user better to improve a display effect of the display screen.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a first flowchart showing a brightness adjustment method according to an exemplary embodiment.
FIG. 2 is a schematic diagram illustrating ambient brightness detected when a display screen faces a light source and is back to the light source.
FIG. 3 is a second flowchart showing a brightness adjustment method according to an exemplary embodiment.
FIG. 4 is a third flowchart showing a brightness adjustment method according to an exemplary embodiment.
FIG. 5 is a structure diagram of a mobile terminal according to an exemplary embodiment.
FIG. 6 is a block diagram of a brightness adjustment device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the present disclosure are for describing particular embodiments only, and are not intended to limit the present disclosure. The singular forms "a/an", "the" and "this" used in the present disclosure and the appended claims are also intended to include the plural forms unless the context clearly indicates other meanings. It is to be understood that the term "and/or" as used herein refers to and includes any or all possible combinations of one or more associated listed items.

It is to be understood that although the terms first, second, third, etc. may be used to describe various information in the present disclosure, the information should not be limited to these terms. The terms are only used to distinguish the same type of information from each other. For example, without departing from the scope of the present disclosure, the first information may also be referred to as second information, and similarly, the second information may also be referred to as first information. Depending on the context, the word "if" as used herein may be interpreted as "during" or "when" or "in response to determination".

In a daily use of a mobile phone, a light source is typically an upper light source. For example, when the mobile phone is used in an indoor environment, the light source may be a light source on a roof; and when the mobile phone is used outdoors, the light source may be the sun, also over the head. When a display screen of the mobile phone upwards faces the light source, data detected by a light sensor on a display screen side may be relatively great, and an adjusted backlight value may be caused to be relatively high. When the display screen of the mobile phone is back to the light source, a numerical value detected by the light sensor may be relatively low, and the adjusted backlight value may be caused to be relatively low. Therefore, in daily use, the backlight value adjusted based on the data detected by the light sensor is often not so accurate and cannot meet a practical requirement well.

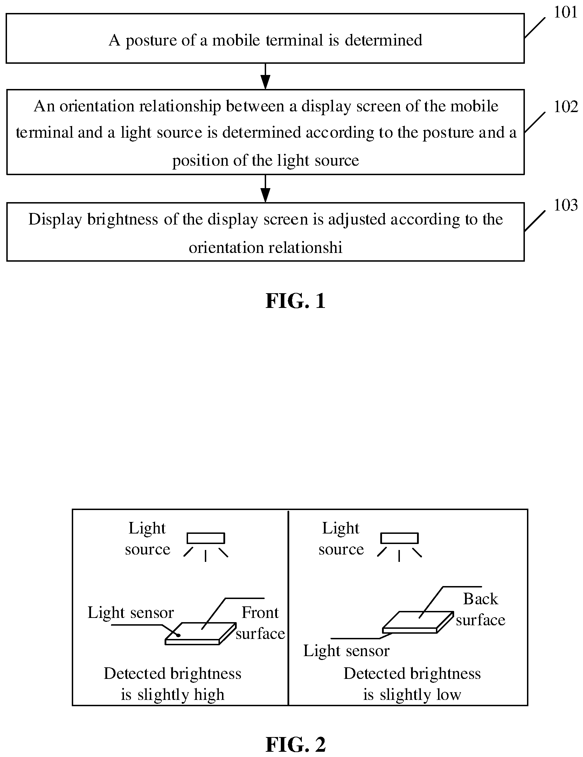

For enabling adjustment of backlight brightness to be accurately adapted to ambient brightness, the embodiments of the present disclosure provide a brightness adjustment method. FIG. 1 is a first flowchart showing a brightness adjustment method according to an exemplary embodiment. As shown in FIG. 1, the method is applied to a mobile terminal and includes the following operations.

In Operation 101, a posture of the mobile terminal is determined.

In Operation 102, an orientation relationship between a display screen of the mobile terminal and a light source is determined according to the posture and a position of the light source.

In Operation 103, display brightness of the display screen is adjusted according to the orientation relationship.

It is to be noted that the mobile terminal that the method is applied to may be any mobile electronic device with a display screen, for example, a smart phone, a pad, a notebook computer or a smart watch.

The display screen may be a liquid crystal display screen and may include a liquid crystal display panel and a backlight component. The liquid crystal display panel may be above the backlight component, and is configured to display information. The backlight component is configured to emit light for displaying of the liquid crystal display panel. The display screen may also be an Organic Light-Emitting Diode (OLED) display screen.

Adjusting the display brightness of the display screen based on the display screen specifically refers to adjusting brightness of the backlight component of the liquid crystal display screen or adjusting a driving voltage of the OLED display screen to adjust display brightness of the OLED display screen.

The posture of the mobile terminal refers to a present presentation form of the mobile terminal and may represent a present pose of the mobile terminal. The posture may include: standing on the short edge, standing on the long edge, flat placement or inclination.

Standing on the short edge may be considered as a presentation form that a body of the mobile terminal is perpendicular to the ground when the short edge of the mobile terminal faces the ground, and in such case, an inclination angle of the body of the mobile terminal may be considered to be 90 degrees. Standing on the long edge refers to a presentation form that the body of the mobile terminal is perpendicular to the ground when the long edge of the mobile terminal faces the ground, and in such case, the inclination angle of the body of the mobile terminal may also be considered to be 90 degrees. Flat placement refers to a presentation form that the body of the mobile terminal is parallel to the ground, and in such case, the inclination angle of the body of the mobile terminal may be considered to be 180 degrees. Inclination refers to a presentation form that the body of the mobile terminal forms a certain inclination angle relative to the ground. Therefore, when the inclination angle of the body of the mobile terminal is detected, the posture of the mobile terminal may be determined.

In some embodiments, the posture of the mobile terminal may also be determined based on data acquired by an acceleration sensor. The acceleration sensor may include a uniaxial acceleration sensor or a triaxial acceleration sensor. Since the mobile terminal may move in any direction, for acquiring the posture more accurately, numerical acceleration values in three orthogonal directions may be acquired through the triaxial acceleration sensor.

For example, the triaxial acceleration sensor may be adopted. The operation that the posture of the mobile terminal is determined may be implemented as follows: acceleration values of the mobile terminal in three directions are acquired based on the triaxial acceleration sensor, vector decomposition is performed on the acceleration value in each direction to determine an included angle between the mobile terminal and the ground, and the posture of the mobile terminal is determined based on the included angle.

The three directions include an X-axis direction, a Y-axis direction and a Z-axis direction. The Z-axis direction refers to a direction perpendicular to the ground. For example, the Z-axis is a direction where the body is located when the body of the mobile terminal is perpendicular to the ground. The X-axis direction refers to a direction parallel to the ground and perpendicular to the Z-axis direction, and namely may be a direction that the display screen faces. The Y-axis direction refers to a direction parallel to the ground and perpendicular to the Z-axis and X-axis directions, i.e., a direction that a lateral surface perpendicular to the display screen faces.

The flat placement pose of the mobile terminal may include flat placement with the display screen facing the light source and may include flat placement with the display screen back to the light source. For distinguishing the two conditions, the acceleration sensor may be arranged at a position close to the display screen or a position far away from the display screen in the mobile terminal to determine flat placement with the display screen facing the light source or flat placement with the display screen back to the light source. For example, when the acceleration sensor is arranged at the position close to the display screen in the mobile terminal, an acceleration detected by the acceleration sensor in the Z-axis direction in case of flat placement with the display screen facing the light source may be less than a value detected in case of flat placement with the display screen back to the light source.

It is also to be noted that the embodiments of the present disclosure may be applied to an indoor environment or may also be applied to an outdoor environment. In the indoor environment, an indoor light source is typically an upper light source, for example, a light source suspended on a roof, or a wall-mounted light source suspended on a wall or a desk lamp supported at a high position. In the outdoor environment, the light source may be the sun, also above, namely over the head.

For determining the orientation relationship between the display screen and the light source, it is needed to acquire the position of the light source and the posture of the mobile terminal. Herein, the posture of the mobile terminal may be obtained through the data acquired by the acceleration sensor. The position of the light source may be acquired as follows: the position of the light source in the indoor environment is obtained through data received by an input device of the mobile terminal, namely a user may directly input the position of the light source on the mobile terminal, that is, corresponding positions may be input in advance for indoor environments with different sizes. The position of the indoor light source may also be acquired through both an image acquired by a camera of the mobile terminal and data acquired by a distance sensor, namely the position of the indoor light source may be determined through a distance parameter detected by the distance sensor after the camera shoots the image of the light source.

For the light source in the outdoor environment, a user may directly input the position of the light source on the mobile terminal to enable the input device of the mobile terminal to acquire the light source in the outdoor environment according to received data. Herein, the input position of the light source may be a longitude and a latitude of a position of the sun. It is to be noted that, when the user uses the mobile terminal in the outdoor environment and it is detected that the mobile terminal is parallel to the ground and the display screen is back to the ground, it may be considered that the display screen of the mobile terminal faces the light source.

Since the sun is far away from the mobile terminal in the outdoor environment, the operation that the posture of the mobile terminal is determined in the embodiment of the present disclosure may be mostly for the indoor environment, namely the operation that the posture of the mobile terminal is determined may include that the posture of the mobile terminal is determined in the indoor environment.

The operation that the display brightness of the display screen is adjusted may include that: the display brightness of the display screen is increased or the display brightness of the display screen is decreased.

The orientation relationship may include, but not limited to, that the display screen faces the light source or the display screen is back to the light source.

In some embodiments, the display brightness of the display screen may be adjusted according to present display brightness of the display screen, the orientation relationship and ambient brightness detected by a light sensor.

For example, when the display screen is back to the light source, even though the ambient brightness detected by the light sensor is high, if the present display brightness is lower than preset brightness, the display brightness of the display screen may be increased to ensure that the adjusted display brightness of the display screen reaches the preset brightness. For another example, when the present display brightness of the display screen is equal to the preset brightness, the present display brightness of the display screen may be maintained. Or, when the present display brightness is higher than the preset brightness, the present display brightness of the display screen may be decreased. In a word, the present display brightness may be adjusted to the preset brightness to ensure that the adjusted display brightness achieves an expected display effect.

For another example, when the display screen faces the light source, high ambient brightness may be detected. However, due to the existence of backlight, the present display brightness of the display screen may be adjusted according to a brightness difference between the ambient brightness and the present display brightness to ensure that the adjusted present display brightness is still enough for clear displaying in a backlight scenario. For example, the present display brightness of the display screen may be adjusted to be slightly higher than the ambient brightness or close to the ambient brightness to ensure the display effect.

The mobile terminal may include the light sensor or a brightness sensor. The light sensor or the brightness sensor may be on a surface where the display screen is located, and each of both is configured to detect brightness of an environment where the mobile terminal is presently located.

In a practical application, as shown in FIG. 2 which is a schematic diagram illustrating ambient brightness detected when a display screen faces a light source and is back to the light source. When a user uses the mobile terminal and the display screen of the mobile terminal faces the light source, since the light sensor is on the surface where the display screen is located, the light sensor may face the light source and detect great ambient brightness. For viewing content on the display screen with eyes more clearly, backlight brightness of the display screen may be automatically increased in a present operation. When the display screen of the mobile terminal is back to the light source, the ambient brightness detected by the light sensor may be relatively low, and for eliminating irritations caused by bright light to the eyes, the backlight brightness of the display screen may be automatically decreased. However, it is to be noted that adjustment of the backlight brightness refers to adjustment implemented based on the brightness detected by the light sensor, i.e., adjustment automatically implemented in an existing mobile terminal.

A backlight value obtained by automatic adjustment when the light sensor faces the light source may be relatively great and higher than a practical ambient brightness value, which is unfavorable for viewing of information on the display screen with eyes. A backlight value obtained by automatic adjustment when the light sensor is back to the light source may be relatively small and lower than a practical ambient brightness value, which is also unfavorable for viewing of the information on the display screen with eyes. Therefore, the backlight value adjusted based on the brightness detected by the light sensor is needed to be further adjusted.

In some embodiments, before the orientation relationship between the display screen of the mobile terminal and the light source changes, the present display brightness of the display screen may be considered by default as display brightness desired by the user as well as a display effect expected by the user. In such case, the operation that the display brightness of the display screen is adjusted according to the orientation relationship may include that: when the display screen faces the light source, the display brightness of the display screen is decreased; or when the display screen is back to the light source, the display brightness of the display screen is increased.

Decreasing the display brightness of the display screen refers to further decreasing the backlight value based on the original backlight value adjusted based on the brightness detected by the light sensor. Increasing the display brightness of the display screen refers to further increasing the backlight value based on the original backlight value adjusted based on the brightness detected by the light sensor.

Therefore, in the embodiments of the present disclosure, the display brightness may be adjusted according to the orientation relationship after the orientation relationship between the display screen of the mobile terminal and the light source is determined, so that the display brightness may be adapted to the ambient brightness more accurately under different orientation relationships and may be not slightly high or slightly low, and the display brightness may be adapted to light changes better to further meet the practical requirement of a user better.

In some embodiments, the situation that the display screen faces the light source may include that the display screen perpendicularly faces the light source or the display screen obliquely faces the light source. The situation that the display screen perpendicularly faces the light source refers to that the display screen is under the light source. The situation that the display screen obliquely faces the light source refers to that the display screen faces the light source but is not under the light source, namely a certain inclination angle may be formed with a vertical plane where the light source is located.

Correspondingly, the situation that the display screen is back to the light source may include that the display screen is perpendicularly back to the light source or the display screen is obliquely back to the light source.

The situation that the display screen perpendicularly faces the light source or the display screen obliquely faces the light source may be determined according to a relationship between a position of the mobile terminal and the position of the light source.

The position of the mobile terminal may be detected according to a position sensor. That is, in some embodiments, the mobile terminal may further include the position sensor configured to detect the position of the mobile terminal.

It is to be noted that, no matter whether the display panel perpendicularly faces the light source or the display screen obliquely faces the light source, since the display screen faces the light source, the ambient brightness detected at corresponding positions is slightly great, and the corresponding backlight values are needed to be decreased.

The operation that the display brightness of the display screen is decreased or increased may be implemented as follows: the display brightness is decreased or increased based on the backlight value according to a preset proportion. The preset proportion may be a proportion calculated according to optimal brightness measured by experiments and adapted to human eyes in different environments.

As an example, when the display screen is perpendicularly back to the light source, if a brightness value detected by the light sensor is 120LUX and the preset proportion is 0.1, decreasing the display brightness of the display screen refers to decreasing by 12LUX. When the display screen is slantways back to the light source, since the brightness value detected by the light sensor is absolutely lower than 120LUX detected when the display screen is perpendicularly back to the light source, the brightness value in this case being hypothesized to be 116LUX, decreasing the display brightness of the display screen may refer to decreasing by 11.6LUX.

Therefore, the manner of adjustment according to the preset proportion is more consistent with a practical adjustment requirement, and targeted adjustment may be implemented in different posture conditions during the practical application.

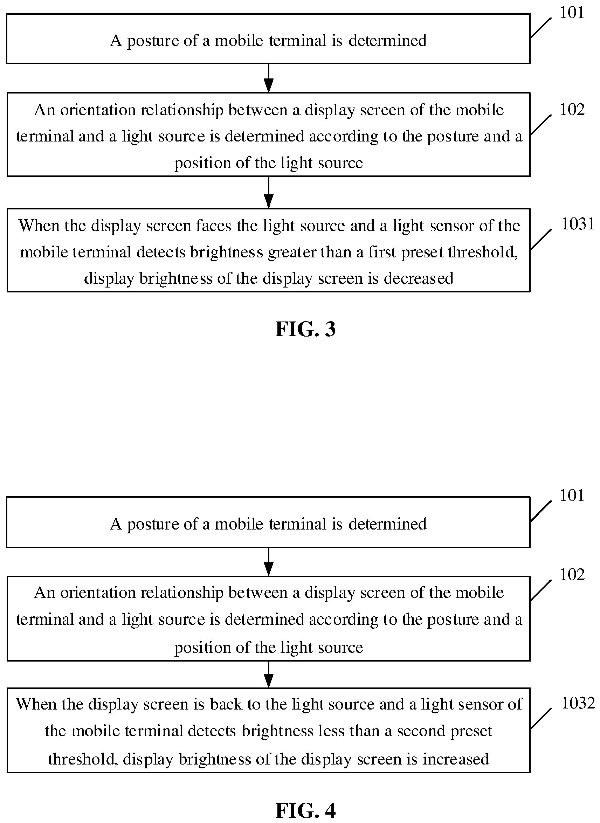

In some embodiments, FIG. 3 is a second flowchart showing a brightness adjustment method according to an exemplary embodiment. As shown in FIG. 3, the operation that the display brightness of the display screen is adjusted according to the orientation relationship may specifically include the following operation.

In Operation 1031, when the display screen faces the light source and a light sensor of the mobile terminal detects brightness greater than a first preset threshold, the display brightness of the display screen is decreased.

During the practical application, shielding may exist in the use of the mobile terminal, and consequently, the ambient brightness detected by the light sensor is also relatively low even though the display screen faces the light source. In such case, it is not appropriate to decrease the backlight brightness of the display screen.

Then, for meeting the practical application condition better and accurately representing an environmental change, in the embodiments of the present disclosure, the backlight value may further be decreased based on the original backlight value adjusted based on the brightness detected by the light sensor only when the display screen faces the light source and the light sensor detects the brightness greater than the first preset threshold.

Herein, the first preset threshold represents a minimum ambient brightness standard for the condition that the display screen faces the light source, and different practical environments may correspond to different first preset thresholds. For example, an indoor environment of the first floor and an indoor environment of the twentieth floor may correspond to different first preset threshold, and the first preset threshold corresponding to the indoor environment of the twentieth floor may be higher than the first preset threshold corresponding to the first floor.

The first preset threshold may be a value acquired when the light sensor faces the light source at a position farthest away from the light source in a preset region. The preset region may be set to be a region taking the mobile terminal as a center and taking a preset numerical value as a radius. The preset numerical value may adopt any numerical value according to a practical requirement.

Accordingly, the brightness value detected by the light sensor may be further compared with the first preset threshold to adjust the display brightness of the display screen on the basis that the orientation relationship is determined, so that the adjustment accuracy may be improved, and the practical application requirement may be met better.

It is to be noted that, for the condition that the shielding exists in the using process, when the shielding exists and the display screen is back to the light source, the brightness value detected by the light sensor may be lower, and in such case, the display brightness of the display screen is needed to be increased.

In some embodiments, FIG. 4 is a third flowchart showing a brightness adjustment method according to an exemplary embodiment. As shown in FIG. 4, the operation that the display brightness of the display screen is adjusted according to the orientation relationship may further include the following operation.

In Operation 1032, when the display screen is back to the light source and the light sensor of the mobile terminal detects brightness less than a second preset threshold, the display brightness of the display screen is increased.

There may be another light source, for example, light emitted by a television, other than a main light source (for example, the light source on the roof) in the use of the mobile terminal. Consequently, when the display screen is back to the light source, the brightness detected by the light sensor may be higher than brightness detected when there is only the main light source, and the backlight value adjusted based on the brightness detected by the light sensor may not be slightly low. In such case, it is not appropriate to increase the backlight brightness of the display screen.

For meeting the practical application condition better and accurately reflecting the environmental change, in the embodiments of the present disclosure, the backlight value may further be increased based on the original backlight value adjusted based on the brightness detected by the light sensor only when the display screen is back to the light source and the light sensor detects the brightness less than the second preset threshold.

Herein, the second preset threshold represents a maximum ambient brightness standard for the condition that the display screen is back to the light source, and different practical environments may correspond to different second preset thresholds. The second preset threshold may be a value acquired when the light sensor is back to the light source at a position closest to the light source in the preset region.

Accordingly, the brightness value detected by the light sensor may be further compared with the second preset threshold to adjust the display brightness of the display screen on the basis that the orientation relationship is determined, so that the adjustment accuracy may be improved, and the practical application requirement may be met better.

It is to be noted that, for the condition that there is another light source other than the main light source (for example, the light source on the roof) in the using process, if the display screen faces the light source, the brightness value detected by the light sensor may be higher, and in such case, the display brightness of the display screen is needed to be decreased.

In some embodiments, the method may further include that:
an adjustment parameter of the display brightness is acquired.

Herein, the adjustment parameter may include an adjustment proportion or an adjustment value.

The operation that the display brightness of the display screen is adjusted may include that:
the display brightness of the display screen is decreased or increased according to the adjustment parameter.

For example, the adjustment parameter may be the adjustment proportion. Decreasing the display brightness of the display screen according to the adjustment parameter refers to decreasing the display brightness according to the adjustment proportion based on the backlight value adjusted based on the brightness detected by the light sensor. Increasing the display brightness of the display screen according to the adjustment parameter refers to increasing the display brightness according to the adjustment proportion based on the backlight value adjusted based on the brightness detected by the light sensor.

The adjustment proportion may be a preset value. Specifically, the adjustment proportion may be measured according to experiments. For example, the adjustment proportion may be 10%. That is, the adjustment proportion refers to a ratio, measured by experiments, of the practical ambient brightness to the ambient brightness detected when the display screen faces the light source in different environments.

Therefore, in the manner of adjustment according to the adjustment parameter, targeted adjustment may be implemented to meet the practical adjustment requirement for different posture conditions during the practical application.

According to the embodiments of the present disclosure, a posture of a mobile terminal may be determined, an orientation relationship between a display screen of the mobile terminal and a light source may be further determined according to the posture and a position of the light source, and display brightness of the display screen may be adjusted according to the orientation relationship. Accordingly, after the orientation relationship between the display screen of the mobile terminal and the light source is determined, when the display screen faces the light source, the backlight brightness may be properly decreased because there is a certain deviation between actual backlight brightness and the requirement. When the display screen is back to the light source, the backlight source may be properly increased. Therefore, the display brightness may be adapted to the ambient brightness more accurately under different orientation relationships and may be not slightly high or slightly low, and the display brightness may be adapted to light changes better to further meet the practical requirement of the user and also optimize the visual experience.

Furthermore, the backlight brightness may be further adjusted based on the backlight value adjusted based on the brightness detected by the light sensor and the posture determined by the acceleration sensor, and in such a manner of combining different types of sensors to implement adjustment, application scenarios of the mobile terminal are also enriched.

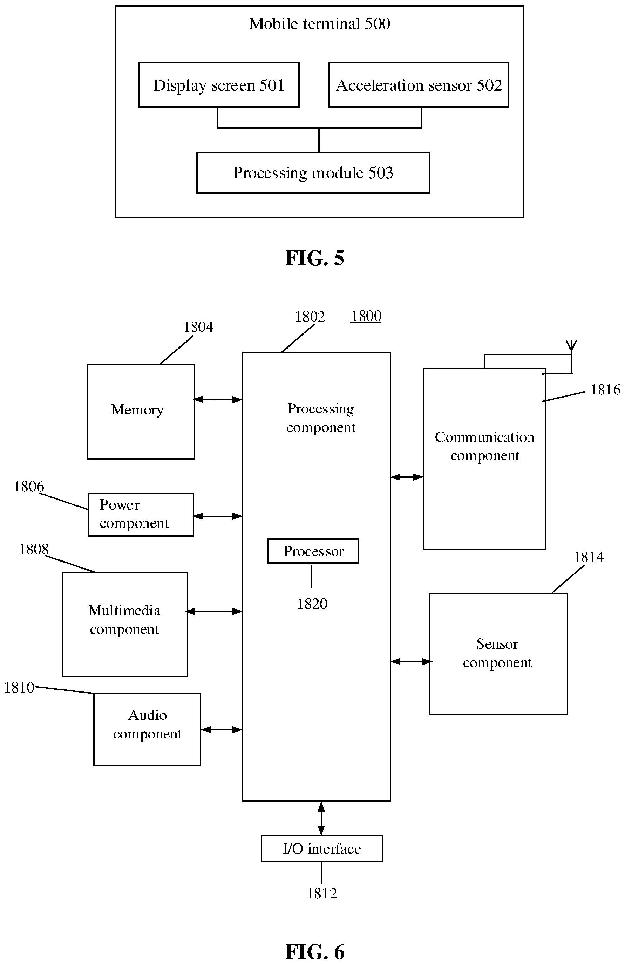

For accurately adapting adjusted backlight brightness to ambient brightness, the embodiments of the present disclosure also provide a mobile terminal. FIG. 5 is a structure diagram of a mobile terminal according to an exemplary embodiment. As shown in FIG. 5, the mobile terminal 500 includes:
a display screen 501;
an acceleration sensor 502, configured to determine a posture of the mobile terminal; and
a processing module 503, connected with the display screen 501 and the acceleration sensor 502, and configured to determine an orientation relationship between the display screen and a light source according to the posture and a position of the light source and adjust display brightness of the display screen according to the orientation relationship.

In some embodiments, the processing module may be a processor.

In some embodiments, the orientation relationship between the display screen and the light source may include that the display screen faces the light source or the display screen is back to the light source.

In some embodiments, the mobile terminal may further include:
a light sensor, configured to detect ambient brightness; and
the processing module may be connected with the light sensor, and is configured to, when the display screen faces the light source and brightness greater than a first preset threshold is detected, decrease the display brightness of the display screen, and is further configured to, when the display screen is back to the light source and brightness less than a second preset threshold is detected, increase the display brightness of the display screen.

In some embodiments, the processing module is further configured to acquire an adjustment parameter of the display brightness and decrease or increase the display brightness of the display screen according to the adjustment parameter.

According to the embodiment of the present disclosure, the posture of the mobile terminal may be determined through the acceleration sensor, and the processing module may further determine the orientation relationship between the display screen of the mobile terminal and the light source according to the posture determined by the acceleration sensor and the position of the light source and adjust the display brightness of the display screen according to the orientation relationship. Accordingly, after the orientation relationship between the display screen of the mobile terminal and the light source is determined, when the display screen faces the light source, the backlight brightness may be properly decreased because there is a certain deviation between the practical backlight brightness and the requirement; and when the display screen is back to the light source, the backlight source may be properly increased. Therefore, the display brightness may be adapted to the ambient brightness more accurately under different orientation relationships and may be not slightly high or slightly low, and the display brightness may be adapted to light changes better to further meet the practical requirement of the user and also optimize the visual experience.

Furthermore, the backlight brightness may be further adjusted based on the backlight value adjusted based on the brightness detected by the light sensor and the posture determined by the acceleration sensor, and in such a manner of combining different types of sensors to implement adjustment, application scenarios of the mobile terminal are enriched.

With respect to the components in the above embodiment, the specific manners for performing operations for individual components therein have been described in detail in the embodiment regarding the method, which will not be elaborated herein.

FIG. 6 is a block diagram of a brightness adjustment device 1800 according to an exemplary embodiment. For example, the device 1800 may be a mobile phone, a computer, a digital broadcast terminal, a messaging device, a gaming console, a tablet, a medical device, exercise equipment, a personal digital assistant and the like.

Referring to FIG. 6, the device 1800 may include one or more of the following components: a processing component 1802, a memory 1804, a power component 1806, a multimedia component 1808, an audio component 1810, an Input/Output (I/O) interface 1812, a sensor component 1814, and a communication component 1816.

The processing component 1802 typically controls overall operations of the device 1800, such as the operations associated with display, telephone calls, data communications, camera operations, and recording operations. The processing component 1802 may include one or more processors 1820 to execute instructions to perform all or part of the operations in the abovementioned method. Moreover, the processing component 1802 may further include one or more modules which facilitate interaction between the processing component 1802 and the other components. For instance, the processing component 1802 may include a multimedia module to facilitate interaction between the multimedia component 1808 and the processing component 1802.

The memory 1804 is configured to store various types of data to support the operation of the device 1800. Examples of such data include instructions for any applications or methods operated on the device 1800, contact data, phonebook data, messages, pictures, video, etc. The memory 1804 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1806 may provide power for various components of the device 1800. The power component 1806 may include a power management system, one or more power supplies, and other components associated with generation, management and distribution of power for the device 1800.

The multimedia component 1808 may include a screen providing an output interface between the device 1800 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action but also detect a duration and pressure associated with the touch or swipe action. In some embodiments, the multimedia component 1808 includes a front camera and/or a rear camera. The front camera and/or the rear camera may receive external multimedia data when the device 1800 is in an operation mode, such as a photographing mode or a video mode. Each of the front camera and/or the rear camera may be a fixed optical lens system or have focusing and optical zooming capabilities.

The audio component 1810 is configured to output and/or input an audio signal. For example, the audio component 1810 includes a Microphone (MIC), and the MIC is configured to receive an external audio signal when the device 1800 is in the operation mode, such as a call mode, a recording mode and a voice recognition mode. The received audio signal may further be stored in the memory 1804 or sent through the communication component 1816. In some embodiments, the audio component 1810 further includes a speaker configured to output the audio signal.

The I/O interface 1812 may provide an interface between the processing component 1802 and a peripheral interface module, and the peripheral interface module may be a keyboard, a click wheel, a button and the like. The button may include, but not limited to: a home button, a volume button, a starting button and a locking button.

The sensor component 1814 may include one or more sensors configured to provide status assessment in various aspects for the device 1800. For instance, the sensor component 1814 may detect an on/off status of the device 1800 and relative positioning of components, such as a display and small keyboard of the device 1800, and the sensor component 1814 may further detect a change in a position of the device 1800 or a component of the device 1800, presence or absence of contact between the user and the device 1800, orientation or acceleration/deceleration of the device 1800 and a change in temperature of the device 1800. The sensor component 1814 may include a proximity sensor configured to detect presence of an object nearby without any physical contact. The sensor component 1814 may also include a light sensor, such as a Complementary Metal Oxide Semiconductor (CMOS) or Charge Coupled Device (CCD) image sensor, configured for use in an imaging application. In some embodiments, the sensor component 1814 may also include an acceleration sensor, a gyroscope sensor, a magnetic sensor, a pressure sensor or a temperature sensor.

The communication component 1816 is configured to facilitate wired or wireless communication between the device 1800 and another device. The device 1800 may access a communication-standard-based wireless network, such as a Wireless Fidelity (WiFi) network, a 2nd-Generation (2G) or 3rd-Generation (3G) network or a combination thereof. In an exemplary embodiment, the communication component 1816 receives a broadcast signal or broadcast associated information from an external broadcast management system through a broadcast channel. In an exemplary embodiment, the communication component 1816 further includes a Near Field Communication (NFC) module to facilitate short-range communication. For example, the NFC module may be implemented based on a Radio Frequency Identification (RFID) technology, an Infrared Data Association (IrDA) technology, an Ultra-WideBand (UWB) technology, a Bluetooth (BT) technology or another technology.

In an exemplary embodiment, the device 1800 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including instructions, such as the memory 1804 including instructions, and the instructions may be executed by the processor 1820 of the device 1800 to implement the abovementioned method. For example, the non-transitory computer-readable storage medium may be a ROM, a Random Access Memory (RAM), a Compact Disc Read-Only Memory (CD-ROM), a magnetic tape, a floppy disc, an optical data storage device and the like.

According to a non-transitory computer-readable storage medium, instructions in the storage medium may be executed by a processor of a brightness adjustment device to implement the brightness adjustment method. The brightness adjustment method includes that:
a posture of a mobile terminal is determined;
an orientation relationship between a display screen of the mobile terminal and a light source is determined according to the posture and a position of the light source; and
display brightness of the display screen is adjusted according to the orientation relationship.

In some embodiments, the orientation relationship between the display screen and the light source may include that the display screen faces the light source or the display screen is back to the light source.

In some embodiments, the operation that the display brightness of the display screen is adjusted according to the orientation relationship may include one of that:
when the display screen faces the light source and a light sensor of the mobile terminal detects brightness greater than a first preset threshold, the display brightness of the display screen is decreased; and
when the display screen is back to the light source and the light sensor of the mobile terminal detects brightness less than a second preset threshold, the display brightness of the display screen is increased.

In some embodiments, the method may further include that:
an adjustment parameter of the display brightness is acquired; and
the operation that the display brightness of the display screen is adjusted includes that:
the display brightness of the display screen is decreased or increased according to the adjustment parameter.

In some embodiments, the operation that the posture of the mobile terminal is determined may include that:
the posture of the mobile terminal is determined according to data acquired by an acceleration sensor of the mobile terminal.

Other implementation solutions of the present disclosure will be apparent to those skilled in the art from consideration of the specification and practice of the present disclosure. This present disclosure is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for brightness adjustment, applied to a mobile terminal, the method comprising:
determining a posture of a mobile terminal;
determining an orientation relationship between a display screen of the mobile terminal and a light source according to the posture and a position of the light source; and
adjusting display brightness of the display screen according to the orientation relationship.

2. The method of claim 1, wherein the orientation relationship between the display screen and the light source comprises that the display screen faces the light source or the display screen is back to the light source.

3. The method of claim 1, wherein adjusting the display brightness of the display screen according to the orientation relationship comprises:
when the display screen faces the light source and a light sensor of the mobile terminal detects brightness greater than a first preset threshold, decreasing the display brightness of the display screen; or
when the display screen is back to the light source and the light sensor of the mobile terminal detects brightness less than a second preset threshold, increasing the display brightness of the display screen.

4. The method of claim 1, further comprising:
acquiring an adjustment parameter of the display brightness,
wherein adjusting the display brightness of the display screen comprises:
decreasing or increasing the display brightness of the display screen according to the adjustment parameter.

5. The method of claim 1, wherein determining the posture of the mobile terminal comprises:
determining the posture of the mobile terminal according to data acquired by an acceleration sensor of the mobile terminal.

6. A mobile terminal, comprising:
a display screen;
an acceleration sensor, configured to determine a posture of the mobile terminal; and
a processing module, connected with the display screen and the acceleration sensor, and configured to determine an orientation relationship between the display screen and a light source according to the posture and a position of the light source and adjust display brightness of the display screen according to the orientation relationship.

7. The mobile terminal of claim 6, wherein the orientation relationship between the display screen and the light source comprises that the display screen faces the light source or the display screen is back to the light source.

8. The mobile terminal of claim 6, further comprising:
a light sensor, configured to detect ambient brightness,
wherein the processing module is connected with the light sensor, and is configured to:
when the display screen faces the light source and brightness greater than a first preset threshold is detected, decrease the display brightness of the display screen; or
when the display screen is back to the light source and brightness less than a second preset threshold is detected, increase the display brightness of the display screen.

9. The mobile terminal of claim 8, wherein
the processing module is further configured to acquire an adjustment parameter of the display brightness and decrease or increase the display brightness of the display screen according to the adjustment parameter.

10. A device for brightness adjustment, comprising:
a processor; and
a memory configured to store instructions executable by the processor,
wherein the processor is configured to execute the instructions stored in the memory to implement the method of any one of claims 1-5.

11. A non-transitory computer-readable storage medium, having instructions stored thereon that, when executed by a processor of a device for brightness adjustment, cause the device for brightness adjustment to implement the method of any one of claims 1-5.
